**Europäisches Patentamt**

**European Patent Office**

**Office européen des brevets**

(19)

(11) Numéro de publication: **0 151 090**
**B1**

(12)

# FASCICULE DE BREVET EUROPEEN

(45) Date de publication du fascicule du brevet:
**13.07.88**

(51) Int. Cl.⁴: **A 21 D 13/08**

(21) Numéro de dépôt: **85810019.1**

(22) Date de dépôt: **22.01.85**

(54) **Procédé de fabrication d'articles de biscuiterie.**

(30) Priorité: **26.01.84 CH 357/84**

(43) Date de publication de la demande:
**07.08.85 Bulletin 85/32**

(45) Mention de la délivrance du brevet:
**13.07.88 Bulletin 88/28**

(84) Etats contractants désignés:
**AT BE CH DE FR GB IT LI LU NL SE**

(56) Documents cités:
**EP - A - 0 113 056**
**FR - A - 325 767**
**FR - A - 2 124 734**
**FR - A - 2 382 860**
**FR - A - 2 409 007**
**GB - A - 208 257**
**US - A - 3 393 074**

(73) Titulaire: **BATTELLE MEMORIAL INSTITUTE, 7 route de Drize, CH-1227 Carouge/Genève (CH)**

(72) Inventeur: **Giddey, Claude, 59, route de Chêne, CH-1208 Genève (CH)**
Inventeur: **Bunter, Guy, 28 avenue Vibert, CH-1227 Carouge (CH)**

(74) Mandataire: **Dousse, Blasco et al, 7, route de Drize, CH-1227 Carouge/Genève (CH)**

## Description

La présente invention concerne le domaine des produits alimentaires boulangers, notamment les produits de biscuiterie tels que biscuits, sablés, crackers, petits fours et autres.

Suivant la pratique habituelle, pour la fabrication de tels aliments, on prépare d'abord une pâte au moyen des ingrédients habituels (farine de céréales diverses, matières grasses, sucres édulcorants, lait, produits condimentaires, sel, levure, arôme et autres) qu'on malaxe au pétrin jusqu'à consistance voulue. Puis on travaille la pâte (par laminage, stratification et autres) pour la mise en forme des articles de biscuiterie qu'on désire obtenir et on passe ceux-ci au four à des températures de l'ordre de 150–280°, suivant le type d'articles considéré, jusqu'au degré de cuisson voulu.

Cette technique traditionelle quoiqu'utilisée depuis très longtemps, présente certains inconvénients parmi lesquels on peut citer le manque de conservation de certains ingrédients tels que matières grasses et lait entier et la dépense relativement élevée d'énergie lors de la cuisson. En effet, et ceci pariculièrement pour les articles de relativement grandes dimensions, la période de chauffe doit être assez prolongée pour que la plus grande partie de l'eau présente dans la pâte s'évapore pendant la cuisson, celle-ci devant être homogène jusqu'au coeur de l'article.

L'invention, qui concerne un procédé de fabrication d'articles de biscuiterie, remédie à ces inconvénients. Ce procédé est défini dans la revendication 1.

On notera que la possibilité de réaliser des articles de biscuiterie par frittage de granules de pâte précuites ou prérôties sans qu'il soit indispensable de faire appel à un liant est surprenante car rien ne permettrait à l'homme de métier de prévoir que, dans de telles conditions, il se produira sous pression une agglomération suffisante de ces particules pour que l'article ainsi réalisé présente une tenue mécanique et une homogénéité comparable à celles des biscuits préparés par les moyens habituels. Il est cependant évident que, lors de l'opération de pressage, on peut agir sur l'affinité interparticulaire et sur la résistance à l'effritement du biscuit pressé par addition d'agents liants ou d'agglomération tels que lactose, alginates, dextrines, carrageenates etc.

On notera cependant que le principe selon lequel on peut réaliser des articles de biscuiterie à partir d'ingrédients granulés est, en soi, connu. Ainsi, le document EP-A 113 056 décrit la préparation d'un biscuit de consistance plastique composé de granules d'une base cuite expansée enrobés d'une forte proportion d'un liant sucré et agglomérés par pressage.

Un autre document, le US-A 3 393 074 divulgue la préparation de cakes et gâteaux à teneur en eau relativement élevée par agglomération de miettes de fragments de pâte précuite, leur agglomération au moyen d'un liant et leur pressage (à faible pression), l'article obtenu présentant une texture molle.

Le document FR-A 2 124 734 concerne la préparation de biscuits par agglomération de fragments de pâte à base de farine d'avoine. Ce procédé consiste à préparer une pâte de farine et d'eau (10–20% en poids d'humidité), transformer cette pâte en flocons (par expansion), sécher ces flocons dans un courant d'air chaud (température 204 à 427°C), pulvériser ces flocons séchés en granules, les mélanger avec un liant (1 partie de liant pour 2 à 3 parties de fragments), presser le mélange dans un moule et sécher les biscuits moulés jusqu'à atteindre 4–5% d'humidité.

Le document GB-A 208 257 décrit la fabrication de biscuits suivant un procédé consistant à cuire de la farine à l'état pulvérulent sec et à mouler ensuite celle-ci en forme sous pression élevée.

Le document FR-A 2 409 007 décrit un procédé suivant lequel on sèche ou grille des produits panifiés (par exemple chapelure, biscottes, pain grillé, déchets de pain, etc.), on les broie et on soumet le produit broyé à une extrusion-cuisson.

Finalement, le document FR-A 2 382 860 décrit l'utilisation, pour fabriquer des articles de boulangerie, d'un mélange de débris de biscuits, d'eau et d'oeufs, le tout étant pétri, façonné et cuit au four.

On notera cependant qu'aucun des documents cités ci-dessus ne divulgue simultanément la fragmentation de la pâte en particules non expansées, la cuisson rapide de celles-ci, par exemple en lit fluidisé et le frittage de ces particules ainsi cuites en forme d'articles de biscuiterie, le produit obtenu se rapprochant fortement des articles correspondants obtenus par les voies habituelles.

Par la réduction d'une quantité notable de l'eau nécessaire à la confection habituelle de la pâte, on veut dire à la revendication 1 que, de préférence, on n'utilise que des quantités comprises entre 10 et 70% de la quantité normalement employée. Ainsi, si pour un kg de pâte à biscuit ordinaire la quantité d'eau présente se monte normalement à 400 g, dans le procédé de l'invention, cette quantité sera préférentiellement de l'ordre de 40 g à 240 g. — C'est en partie en raison de la faible quantité d'eau présente au départ et, partant, de la relativement faible quantité d'énergie requise pour l'évaporer lors de la cuisson, que le procédé de l'invention est avantageux économiquement.

Pour effectuer le mélange des ingrédients de la pâte, on peut utiliser les moyens habituels de pétrissage des pâtes de boulangerie. Cependant, comme ce mélange comprend une quantité d'eau inférieure à la normale, des mélangeurs à palettes tels que ceux utilisés pour l'homogénéisation de mélanges de consistances relativement sèches (par exemple le «HOBART MIXER») peuvent également convenir.

Pour effectuer la granulation, on a de préférence recours à un malaxeur pétrisseur chauffable à la vapeur. La température est comprise entre la température ambiante (environ 20°C) et 280° (température du four).

Il est bien entendu qu'aux températures inférieures de cette gamme, (entre 20 et 150°), correspond la variante où la pâte est uniquement fragmentée en pariicules ou granules, la cuisson proprement dite intervenant ultérieurement à cette fragmentation, tanids que lorsqu'on opère aux températures supérieures de cette gamme (entre 150 et 280°C) la cuisson des particules intervient simultanément avec la fragmentation.

Les granules issues de la fragmentation de la pâte (entre 20 et 150°C), peuvent être passées ensuite à la cuisson telles quelles. Cependant, pour plus d'homogénéité dans le produit fini, on peut encore réduire ces granules dans une machine à granuler (par exemple ALEXANDERWERK GRANULATOR) à des dimensions de quelques mm, par exemple 1 à 5 mm. Les granules peuvent également être tamisées et ainsi séparées en catégories en fonction de leur taille. En effet, la dimension des granules peut influer, lors du frittage, sur la texture du biscuit ainsi obtenu et, partant, sur ses propriétés gustatives («mouth feeling»). Pour faciliter la post-granulation évoquée ci-dessus, on peut au préalable, légèrement humidifier les fragments issus de l'étape b), par exemple au moyen d'eau, de glycérol ou de solutions aqueuses de polysaccharides.

Pour effectuer la cuisson des granules lorsque celle-ci n'a pas eu lieu lors de la fragmentation, on met en suspension et agitation les granules de préférence dans une courant d'air chaud plusé ou sous forme d'un lit fluidisé. On peut, par exemple utiliser une colonne verticale contenant les granules dans le bas de laquelle on envoie de l'air chauffé par les moyens habituels. La température de cet air est de l'ordre de celle d'un four ordinaire pour la cuisson des produits de biscuiterie, c'est-à-dire 150 g à 280°C. De préférence on utilise de l'air chauffé entre 160 et 200°C, la cuisson des granules se faisant ainsi de quelques secondes à quelques minutes, par exemple 20 sec à 3 min. On voit donc, par ce qui précède, combien il est énergétiquement plus économique de prévoir la cuisson de la pâte à biscuit en granules pluôt que celle du biscuit entier terminé. De plus, cette cuisson peut se faire en continu.

Les granules de pâte biscuitière une fois cuites, on les presse dans le moule d'une presse à mouler. Pour ce faire, on remplit le moule des granules en question et, par le biais d'un piston (ou de tout autre moyen d'exercer une pression effective) on provoque, par frittage, l'agglomération des granules sous la forme d'un tout, homogène, et de forme correspondant à celle du moule. Les pressions nécessaires à la réalisation du biscuit désiré varient dans de notables mesures en fonction de la nature de la pâte constituant les granules et de la présence éventuelle d'autres ingrédients alimentaires. Elle se situe généralement dans la gamme des pressions allant de quelques N à quelques dizaines de N par cm$^2$. De préférence, on travaille à des pressions de 5 à 50 N/cm$^2$ à température ordinaire. On peut, cependant, si on le désire, chauffer le moule, par exemple vers 30-50°C pour accélérer l'opération de frittage. Comme on l'a vu plus haut, on peut ajouter aux granules, avant pressage, un liant pour augmenter l'affinité interparticulaire de l'article fini.

De même, si désiré, on peut mélanger aux granules avant pressage d'autres ingrédients ou additifs alimentaires tels que café ou chocolat en poudre, amandes, noix, noisettes pilées, caramel, fruits secs hachés etc.. L'utilisateur est donc à même de réaliser de nombreuses variétés de biscuits en n'intervenant qu'au niveau final de la préparation et en n'utilisant que des ingrédients dont la conservation au stockage est bonne. En effet, les granules eux-mêmes sont stérilisées par l'effet de cuisson à l'air chaud et, emballées, se conservent pendant très longtemps. On peut donc avoir à disposition en stock des granules provenant de pâtes diverses et convenant à des biscuits de types divers et utiliser ces granules juste au moment du pressage en fonction des besoins. Cette possibilité constitue un autre des avantages multiples de l'invention. Par ailleurs, on peut prévoir des articles composites, par exemple des stratifiés, en alternant, dans le moule, des couches de granules différentes, par exemple des couches de granules de pâte avec des granules d'amandes ou de chocolat.

Les exemples qui suivent illustrent l'invention en détail.

Exemple 1

Dans une mélangeur de Hobart on a placé les ingrédients suivants et on les a mélangés jusqu'à obtention d'un mélange homogène.

| | |
|---|---|
| Farine de froment | 150 g |
| levure chimique | 4,5 g |
| sucre glace | 35 g |
| sucre cristallisé | 17,5 g |
| biscuitine (corps gras) | 36 g |
| œufs en poudre | 3 (17 g) |
| sel | 0,9 g |
| eau | 21 ml |

On a placé la composition ainsi obtenue dans un malaxeur chauffé à 150°C et on l'a travaillée 20 min à cette température, ce qui a fourni des fragments assez fins. On a ensuite cuit ces granules au four à 200° dans un courant d'air pendant 5 à 10 min. On a placé ces granules dans un moule d'une presse et on a effectué un pressage sous 20 N/cm$^2$.

On a ainsi obtenu un biscuit genre sablé de bonne tenue et dont le goût ne différait pas sensiblement des sablés préparés par les moyens habituels.

Exemple 2

Dans un mélangeur de HOBART on a mélangé intimement les ingrédients suivants:

| Farine | 150 g |
|---|---|
| levure | 4,5 g |
| sucre glace | 20 g |
| graisse de coco | 18 g |
| biscuitine | 18 g |
| 1 œuf entier et 2 jaunes | --- |
| sel | 0,9 g |
| lait en poudre | 3 g |
| eau | 30 ml |

On a ensuite chauffé le mélange 10 min à 150°C dans un malaxeur, on a encore ajouté 15 g de sucre glace et 17,5 g de sucre cristallisé et on a malaxé 10 min à 150°C. On a laissé refroidir. On a alors encore ajouté 2 blancs d'oeufs battus et on a malaxé 5 min à température ambiante (20°C.

On a ainsi obtenu des granules relativement grossières dont on a encore réduit le calibre dans une granuleuse jusqu'à obtenir des particules de 1–2 mm.

On a cuit ces granules pendant 3 min à 180°C dans un courant d'air pulsé ascendant et après les avoir aspergées par une solution aqueuse concentrée de lactose et on les a pressées en biscuits sous 20 N/cm².

Exemple 3

On a procédé comme à l'exemple 1 et mélangé intimement dans un malaxeur de Hobart à température ambiante, les ingrédients suivants:

| Farine de blé | 600 g |
|---|---|
| Levure | 7 g |
| Sucre cristallisé | 180 g |
| Biscuitine (corps gras) | 75 g |
| Lait écrémé en poudre | 12 g |
| sel | 4 g |
| Eau | 120 g |

Après avoir malaxé et travaillé la pâte 20 minutes, on l'a introduite dans un granulateur Alexanderwerk Heynau, Münich. Ce dispositif comprend essentiellement deux rouleaux en contact l'un avec l'autre par une génératrice et tournant à contresens. La surface de l'un des rouleaux possède une texture rugueuse (grille à mailles fines) de manière à preévenir le glissement des portions de pâte que le mouvement des rouleaux entraîne entre ceux-ci. Le second rouleau est creux et sa surface cylindrique est percée d'une multitude de trous calibrés (à 2 ou 3 mm dans le cas présent); la pâte pressée entre les rouleaux est forxée à travers ces trous et ressort dans la partie centrale du rouleau sous forme de granules calibrées au diamètre des trous.

Après avoir laissé ces granules reposer 2 heures à 4°C, on les a introduites dans un dispositif en forme d'entonnoir à fond plat poreux (analogue à un entonnoir à fond de verre fritté) et on a dirigé, par l'extrémité inférieure de cet entonnoir, un courant d'air chaud (190–210°C), de manière que les particules se mettent en suspension (lit fluidisé). On a maintenu le passage de l'air 40–70 secondes suivant le degré de cuisson désiré, la couleur des particules passant du jaune pâle (faible cuisson) au brun (cuisson plus poussée). Dans le cas présent, le temps de cuisson était de 55 secondes à 190°C.

Après une brève aspersion des granules cuites par une solution saturée de glucose (15 g sucre – 35 g $H_2O$) à raison de 3,5% en poids on a préparé un mélange homogène de ces granules et de granules de chocolat (granulométrie 1 mm) à raison de 70% en poids de granules de biscuit et 30% de granules de chocolat. On a placé ce mélange dans un moule et effectué le pressage en forme sous 10 N/cm². On a ainsi obtenu des biscuits (A) au chocolat de texture légèrement granuleuse et de goût excellent.

En variante du présent exemple, on a réalisé d'autres mélanges de granules cuites décrites ci-dessus avec d'autres ingrédients comme suit:
B) Granules 80% – noisettes râpées (1–2 mm) 20%
C) Granules 90% – nougât dur broyé (10%)
D) Granules 70% – noisettes râpées (15% – chocolat noir (1–2 mm) 15%.

Ces mélanges B, C et D ont été moulés par pressage dans un moule à piston comme décrit dans les exemples précédents, de manière à former des biscuits frittés correspondants. Tous ces produits présentaient d'excellentes qualités gustatives.

Exemple 4

On a procédé exactement comme à l'exemple 3 à partir des ingrédients suivants:

| Farine | 600 g |
|---|---|
| Levure | 7 g |
| Sucre en poudre | 140 g |
| Biscuitine | 47 g |
| Chocolat noir pulvérisé (à 30% de matières grasses) | 80 g |
| Lait en poudre (écrémé) | 12 g |
| Sel | 4 g |
| Eau | 120 g |

Après malaxage, granulation, cuisson et frittage, on a obtenu d'excellents biscuits au chocolat de texture fine et homogène, le chocolat s'étant intimement dispersé dans la masse.

Exemple 5

On a procédé comme à l'exemple 3 et on a obtenu des biscuits frittées de gôut salé à partir des ingrédients suivants:

| Farine de blé | 605 g |
|---|---|
| Amidon de maïs | 30 g |
| Oléo | 35 g |
| Margarine | 85 g |
| Sucre glace | 30 g |

| Extrait de malt | 3 g |
| Jaunes d'œufs (poudre) | 24 g |
| Sel | 24 g |
| Levure | 7 g |
| Lait frais | 157 g |

Après avoir pétri la pâte, on l'a granulée à 3 mm, on a cuit les granules 60 secondes à 210°C, puis on a pressé en forme sous 25 N/cm².

**Revendications**

1. Procédé de fabrication d'articles de biscuiterie et de boulangerie par moulage et frittage sous pression de particules de pâte précuites suivant lequel, pour le pétrissage de cette pâte, on utilise une quantité d'eau inférieure à celle habituellement requise pour une telle pâte, caractérisé par le fait qu'on granule la pâte en particules en la travaillant dans un malaxeur et, éventuellement, en faisant encore passer ces granules dans un granulateur, la cuisson au four de ces particules intervenant, soit simultanément, soit après la granulation, et par le fait que la température de granulation seule est die 20 à 150°C et que la température à laquelle granulation et cuisson se font simultanément ou que la cuisson se fait seule est de 150 a 280°C.

2. Procédé suivant la revendication 1, caractérisé par le fait que la quantité d'eau utilisée est comprise entre le 10 et le 70% de l'eau utilisée pour une pâte correspondante préparée suivant la technique habituelle.

3. Procédé suivant la revendication 1, caractérisé par le fait qu'en cours de granulation on confère aux particules ou granules une granulométrie de un à quelques mm.

4. Procédé suivant la revendication 1 dans lequel la cuisson des granules est effectuée après granulation, caractérisé par le fait qu'on met celles-ci en agitation dans un courant d'air chaud pulsé ou un lit fluidisé dont l'air est chauffé entre 150 et 280°C, la cuisson s'effectuant en 20 sec. à 3 min.

5. Procédé suivant la revendication 1, caractérisé par le fait que la pression de moulage et frittage est de 5-50 N/cm² à température ordinaire.

6. Procédé suivant la revendication 1, caractérisé par le fait qu'on réalise des articles composites par pressage de mélanges de granules de pâte à biscuit avec des granules d'une ou plusieurs autres pâtes à biscuit et/ou des granules d'autres produits alimentaires.

7. Procédé suivant la revendication 1, caractérisé par le fait qu'avant le pressage on ajoute aux granules un additif d'agglomération.

**Patentansprüche**

1. Verfahren zum Herstellen von Biskuit- und Backwaren aus vorgekochten Teigstücken, die unter Druck geformt und zusammengebacken werden, wobei zum Kneten dieses Teiges eine geringere als die herkömmlicherweise für einen derartigen Teig erforderliche Wassermenge verwendet wird, dadurch gekennzeichnet, dass der Teig durch Verarbeiten in einer Knetmaschine in Stücke zerteilt bzw. granuliert wird, gegebenenfalls unter zusätzlichem Passieren dieser Stücke/Körner durch einen Granulator, wobei das Bakken dieser Stücke/Körner im Ofen gleichzeitig oder anschliessend an das Zerteilen/Granulieren erfolgt, und dass die Temperatur beim alleinigen Zerteilen/Granulieren 20 bis 150°C und beim gleichzeitigen Backen und Zerteilen/Granulieren oder beim alleinigen Backen 150 bis 280°C beträgt.

2. Verfahren nach Anspruch 1, dadurch gekennzeichnet, dass die verwendete Wassermenge zwischen 10 und 70% des Wassers beträgt, das bei einem nach der herkömmlichen Technik erfolgenden Bereiten eines entsprechenden Teiges verwendet wird.

3. Verfahren nach Anspruch 1, dadurch gekennzeichnet, dass die Stücke oder Körner im Laufe der Zerteilung/Granulierung einer Kornklassierung von einem bis einigen Millimetern unterzogen werden.

4. Verfahren nach Anspruch 1, bei dem das Backen der Stücke/Körner anschliessend an die Zerteilung/Körnung erfolgt, dadurch gekennzeichnet, dass diese Stücke/Körner in einem gepulsten warmen Luftstrom oder in einem Wirbel- bzw. Fliessbett in Bewegung versetzt werden, dessen Luft auf einen Wert zwischen 150 bis 280°C erhitzt ist, wobei zwischen 20 Sekunden bis 3 Minuten gebacken wird.

5. Verfahren nach Anspruch 1, dadurch gekennzeichnet, dass der Form- und Zusammenbackdruck 5–50 N/cm² bei üblicher Temperatur beträgt.

6. Verfahren nach Anspruch 1, dadurch gekennzeichnet, dass aus Mischungen vom Biskuitteigkörnern/-stücken mit einem oder mehreren anderen Biskuitteigkörnern/-stücken und/oder Körnern/Stücken anderer Lebensmittelprodukte durch Druckverarbeiten zusammengesetzte Waren hergestellt werden.

7. Verfahren nach Anspruch 1, dadurch gekennzeichnet, dass den Körnern/Stücken vor dem Druckverarbeiten ein Bindemittel zugesetzt wird.

**Claims**

1. A process for manufacturing biscuit-type and bakery articles by moulding and sintering under pressure particles of a prebaked dough, wherein a reduced quantity of water from that conventionally necessary for such a dough is used to knead the dough, characterized in that the dough is granulated into particles by kneading in a mixer an, optionally afterwards passing the granules through a granulating machine, the baking treatment of the particles taking place either similtaneously or after the granulation, and in that the temperature of the granulation is 20 to 150°C, and when granulation and baking are done simultaneously or when baking is effected separately, the temperature is from 150 to 280°C.

2. A process according to claim 1, characterized in that the quantity of water used is between 10 and 70% of the water used for a corresponding dough prepared according to conventional technique.

3. A process to claim 1, characterized in that a particle size of from 1 to a few mm is imparted to the particles or granules during the granulation process.

4. A process according to claim 1 in which baking of the granules takes place after granulation, characterized in that said granules are agitated in a pulsed hot-air stream or a fluidized bed, the air of which is heated between 150 and 280°C, baking taking place within 20 seconds to 3 minutes.

5. A process according to claim 1, characterized in that the moulding and sintering pressure is 5–50 N/cm² at ordinary temperature.

6. A process according to claim 1, characterized in that composite articles are produced by pressing mixtures of granules of biscuit dough with granules of one or more other biscuit doughs and/or granules of other food products.

7. A process according to claim 1, characterized in that a binding additive is addes to the granules before pressing.